(19) Europäisches Patentamt
European Patent Office
Office européen des brevets

(11) EP 4 392 667 B1

(12) EUROPEAN PATENT SPECIFICATION

(45) Date of publication and mention
of the grant of the patent:
15.04.2026 Bulletin 2026/16

(21) Application number: 22813570.3

(22) Date of filing: 07.11.2022

(51) International Patent Classification (IPC):
F03D 7/04 (2006.01)    F03D 9/11 (2016.01)

(52) Cooperative Patent Classification (CPC):
F03D 7/026; F03D 9/11; F05B 2260/42;
F05B 2260/76; F05B 2260/85; F05B 2270/3201;
F05B 2270/3202; Y02E 10/72

(86) International application number:
PCT/EP2022/080992

(87) International publication number:
WO 2023/079145 (11.05.2023 Gazette 2023/19)

(54) **TRANSITIONING OF WIND TURBINE OPERATION**

ÜBERGANG EINER WINDTURBINENOPERATION

TRANSITION DE FONCTIONNEMENT D'UNE ÉOLIENNE

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: 08.11.2021 EP 21206947

(43) Date of publication of application:
03.07.2024 Bulletin 2024/27

(73) Proprietor: Siemens Gamesa Renewable Energy
A/S
7330 Brande (DK)

(72) Inventors:
• HAWKINS, Samuel
7100 Vejle (DK)
• JENSEN, Dennis Stachniuk
7330 Brande (DK)

(74) Representative: SGRE-Association
Siemens Energy Global GmbH & Co. KG
SE I IM P Intellectual Property
Siemenspromenade 9
91058 Erlangen (DE)

(56) References cited:
EP-A1- 3 224 925        EP-A2- 2 146 095
EP-B1- 3 224 925        WO-A1-2021/069045
US-A1- 2020 166 017     US-A1- 2020 232 446

**Description**

Field of the invention

The present invention relates to a method for transitioning the operation of a wind turbine into an energy harvesting mode. It further relates to a corresponding control system and to a computer program for controlling the operation of a wind turbine.

Background

Wind turbines extract energy from the moving wind stream and generate electrical power that is typically fed into a power grid. In low wind conditions or for performing service work, the wind turbine can be shut down, and it may be restarted by using electrical power from the power grid. Similarly, in high wind conditions that exceed the wind speeds for which the wind turbine has been designed, the wind turbine operation may be shut down or may be brought into an operational state that minimizes loading on the structure due to respective environmental conditions. This may similarly occur for offshore wind turbines experiencing excessive wave loading or extreme wind conditions.

A wind turbine may become disconnected from the power grid, for example due to a grid fault or a fault in any intervening system. Also, some wind turbines are not grid connected, they may for example operate in an island mode. It is known to provide such wind turbines with a device that generates electrical energy for facilitating the start-up of these wind turbines once they have become shut down. A typical example is a generator coupled to a diesel engine which produces the required electrical power for start-up. The starting up of a wind turbine requires significant amounts of power, since several wind turbine systems have to be operated, some of which are large power consumers. For example, the yaw drive and the pitch drives may consume considerable amounts of electrical power. In particular, the wind turbine rotor needs to be brought into alignment with the wind direction by operation of the yaw drive. To prepare the wind turbines pitch system for operation, hydraulic pitch systems may need to be pressurized, and an electric pitch system may require the restoring of energy to an emergency pitch system. Further, the wind turbines power conversion hardware needs to be prepared for operation, for example by charging a DC bus of an electric power converter, which may comprise relatively large-sized capacitors. Also, the operation of the cooling system needs to be initiated, which may include the operation of fans and the circulation of cooling fluid.

Significant amounts of energy may thus be consumed during start-up, and the system that provides the respective electrical energy may be depleted after start-up, or may be depleted after a certain low number of start-ups. Accordingly, further start-up attempts may not be possible. This may in particular lead to problems in situations in which the wind turbine needs to be shut down again shortly after start-up. It may thus be necessary to restore the energy level in the system that provides the electrical energy for start-up, which may in some situations not be possible or only possible with significant delay and efforts (e.g. refueling a diesel generator of an offshore wind turbine). It is thus desirable to avoid such depletion of the energy available at the wind turbine for start-up. It is also desirable to avoid excessive energy consumption that may quickly deplete such energy storage system, in particular for a grid-disconnected wind turbine.

The document WO 2021/069045 A1 relates to a method for transitioning a wind turbine from a sleep state to an active state when a measured wind speed exceeds a wake-up threshold. Before comparing the measured wind speed and the wake-up threshold, either the wind speed or the wake-up threshold is adjusted based on an outcome of at least one previous transition of the wind turbine from the sleep state

Summary

Accordingly, there is a need to mitigate at least some of the drawbacks mentioned above and to improve the operation of such wind turbine, in particular to reduce the likelihood of a depletion of a respective energy storage system provided at the wind turbine.

This need is met by the features of the independent claims. The dependent claims describe embodiments of the invention.

According to an aspect, a method for transitioning the operation of a wind turbine into an energy harvesting mode in which the wind turbine operates to generate electrical power from wind energy is provided. An energy storage system associated with the wind turbine is configured to supply electrical power to an auxiliary system of the wind turbine when the wind turbine is not generating or receiving electrical power sufficient for supplying the auxiliary system, for example when the wind turbine is grid-disconnected (e.g. does not have a grid connection, has become disconnected from the power grid, or can only receive a fraction of the required electrical power from the power grid). The method may comprise operating the wind turbine in a first operating mode (which may for example be termed sleep mode), in which the wind turbine is not generating electrical power from wind energy. In the first operating mode, an electrical power supply to a first group of one or more auxiliary power consumers of the auxiliary power system is ceased. Further, in the first operating mode, a second group of one or more auxiliary power consumers of the auxiliary system is supplied with electrical power from the energy storage system. The method further comprises obtaining environmental data including at least one of wind data and meteorological data; determining if the obtained environmental data meets a predefined condition, wherein the predefined condition includes at least one of a wind speed threshold, a wind speed range in which the wind turbine is operable to generate electrical power, a wind speed trend threshold, or a predetermined energy threshold for an expected energy generation. If the predefined condition is met, the method includes causing a transition of the operation of the wind turbine into the energy harvesting mode, wherein transitioning the operation into the energy harvesting mode comprises supplying electrical power from the energy storage system to the one or more auxiliary power consumers of the first group.

By such method, in particular operation in the first operating mode, stored energy is conserved, since only a group of auxiliary power consumers receives electrical power, whereas another group, which can include larger loads, may not receive electrical power. The power consumption of the power consumers of the first group may in particular be (significantly) larger than the power consumption of the power consumers of the second group. At the same time, the wind turbine remains active and thus capable of an automatic transition into the energy harvesting mode. Furthermore, by basing such transition on the predefined condition, it may be ensured that the transition only occurs if the wind conditions are such that sufficient electrical power is generated. For example, the condition may be chosen so that at least an amount of electrical energy is generated that is higher than the amount of electrical energy required for starting up the wind turbine (i.e. for performing the transition). The generated electrical power may for example be used for recharging the energy storage system, so that the energy storage system is not depleted and repeated start-ups are possible. In particular, failed restarts or restart attempts, which may have to be repeated in relatively quick succession in order to return to a prolonged period of energy harvesting, may be avoided.

The energy harvesting mode may in particular be a self-sustained operating mode; in such self-sustained operating mode, the auxiliary system of the wind turbine may be powered from electrical power generated by the wind turbine. Accordingly, the wind turbine can operate without grid connection, i.e. in a grid-disconnected state, which may be due to no grid connection being existent, or the wind turbine having become disconnected from the power grid. In some examples, in the first operating mode or when transitioning into the energy harvesting mode, a small supplementary supply of electrical power may still be present from the power grid. However, in the first operating mode and during the transition, the predominant power supply (e.g. larger than 50 percent, 75 percent, or 90 percent) is provided by the energy storage system. Preferably, all of the power supply in the first operating mode and when transitioning into the energy harvesting mode is provided from the energy storage system. If the condition is not met, the wind turbine may continue to operate in the first operating mode. It should be clear that the first operating mode may itself include different operating modes, for example a sleep mode in which only the second group of auxiliary power consumers is supplied with electrical power, and a further mode in which only some or none of the auxiliary power consumers of the second group are supplied with electrical power. Further, the transition from the first operating mode into the energy harvesting mode may occur via an intermediate operating mode, which may for example be termed "local power mode", and in which the first group and the second group of auxiliary power consumers are supplied with electrical power from the energy storage system (e.g. all auxiliary power consumers are powered) and the wind turbine does not yet produce electrical power from the wind.

The wind turbine may comprise the energy storage system. For example, the energy storage system may be comprised in the wind turbine or may be provided adjacent to a wind turbine tower.

A (signal) trend of a system parameter and/or of an environmental parameter, e.g. a wind speed trend, may be a parameter indicative of a magnitude and/or a direction into which the system parameter and/or environmental parameter, e.g. the wind speed, is developing or changing. The trend may indicate whether the system parameter and/or environmental parameter is increasing over time or decreasing over time. Thus, the trend may be indicative of a direction and/or a magnitude of a development/change of the system parameter and/or environmental parameter. In particular embodiments, a forecast/prediction of the system parameter and/or the environmental parameter may be determined based on the trend of the system parameter and/or the environmental parameter. Preferably, the forecast/prediction may additionally be based on a currently present/actual indication of the system parameter and/or on a currently present/actual indication of the environmental parameter.

A trend threshold may be a threshold for such a trend. The trend threshold may for example be indicative of a maximum and/or a minimum of such trend.

In an example, the determining if the predefined condition is met comprises determining an indication of an expected energy generation during the operation of the wind turbine in the energy harvesting mode when the transition is caused.

In an example, the wind speed threshold of the predefined condition may include a minimum cut-in wind speed threshold at or above which a wind turbine is operable to produce electrical power, and/or a maximum cut-in wind speed threshold at or below which the wind turbine is operable to produce electrical power. Accordingly, by such thresholds, it is possible to determine on the basis of the obtained environmental data if the present conditions are within an operating range of the wind turbine, which increases the chance of a successful start-up of the wind turbine, in particular the chance that a sufficient amount of electrical power is generated after start-up of a wind turbine. The minimum cut-in wind speed threshold (abbreviated minimum threshold) may be lower than the maximum cut-in wind speed threshold (abbreviated maximum threshold herein). The maximum threshold and the minimum threshold may define the operation wind speed range of the wind turbine (with respect to the cut-in wind speed), in particular the wind speed range of the respective condition.

In an example, obtaining the environmental data (in particular in the form of wind data) may comprise obtaining wind speed data and time filtering the wind speed data. Determining if the predefined condition is met may comprise comparing the time filtered wind speed data to the wind speed threshold (e.g. the maximum threshold and/or the minimum threshold) and/or to the wind speed range. The predefined condition may be met if the time filtered wind speed exceeds the minimum threshold and is below the maximum threshold, or lies within the wind speed range, although additional conditions may apply as indicated further below. Such condition may in particular be termed "wind speed condition". Using respective time filtered data may have the advantage that the reliability of the determination that a start-up will result in sufficient power generation can be increased. Time filtering may for example be performed by averaging. For example, a moving average having a predefined window length, e.g. 1 s to 10.000 s, preferably between 100 s and 5000 s, e.g. between 100 s and 1000 s, may be applied to the wind speed data. The wind speed data may be obtained by measuring the data, and the wind turbine may comprise a respective wind sensor. The wind speed data may also be obtained by receiving the data from a data source, such as an external data source providing respective wind speed data, or from a local controller, for example a wind farm controller, a wind turbine controller of another wind turbine and the like. Further, by such time filtering, it may be avoided that the wind turbine reacts to rapid changes of the wind speed, which may be unreliable and may cause the wind turbine to start up when short wind gusts occur, or when the wind speed briefly drops below the maximum threshold during high wind conditions.

According to the invention, the predefined condition includes the wind speed trend threshold. Determining if the predefined condition is met comprises comparing a trend of the wind speed derived from the obtained wind data to the wind speed trend threshold. A trend may in particular be a direction into which the wind speed is developing. The trend indicates whether the wind speed is increasing over time or decreasing over time. By considering such trend, the chance that the wind turbine will produce a sufficient amount of energy in the harvesting mode may further be increased. Deriving the trend of the wind speed may for example comprise comparing time filtered wind speed data, which has been filtered with a first time constant, to time filtered wind speed data that has been filtered with a second time constant, for example by subtracting the current wind speed filtered by a moving average with a longer time window from the current wind speed filtered by a moving average having a shorter time window. The moving average may for example use two different window lengths, for example first window length between 1 s and 500 s, and a second window length between 500 s and 1000 s. The trend of the wind speed may also be derived by comparing an averaged wind speed obtained from the wind speed data for a first point in time to an averaged wind speed obtained from the wind speed data for a second point in time different from the first point in time (e.g. by subtraction of the wind speeds averaged for two different points in time). When looking at two different points in time, these may for example have a time distance between 100 s and 5000 s, for example between 100 s and 1000 s, e.g. 500 s.

The condition employing the wind speed trend threshold may be termed wind speed trend condition. The wind speed trend condition may for example be met if the minimum wind speed threshold is reached from the direction of lower wind speeds, and the trend indicates rising wind speeds, i.e. the derived trend is larger than the wind speed trend threshold (e.g. 0 m/s). It may also be met if the maximum wind speed threshold is reached from higher wind conditions, and the wind speed trend indicates falling wind speeds, i.e. the derived wind speed trend is smaller than the wind speed trend threshold (e.g. 0 m/s). As mentioned above, the maximum/minimum thresholds relate to the cut-in thresholds. It should be clear that a threshold of 0 m/s is only an example for the wind speed trend threshold, and that the threshold may be set so as to require a stronger trend, for example above 2, 3, 4 or more m/s for increasing wind speeds, and -1, -2, -3, or more m/s for falling wind speeds. The wind speed trend threshold may be different for low wind conditions and high wind conditions, as these may require different trends, and both such different trend thresholds may be employed in the predefined condition.

In an example, the predefined condition comprises a wind speed condition including the wind speed threshold and/or the wind speed range, and further comprises a wind speed trend condition including the wind speed trend threshold. The predefined condition may be met if both the wind speed condition and the wind speed trend condition are met (combined wind speed/trend condition). Accordingly, by requiring that both of these conditions are fulfilled, the chance that the energy storage system is depleted can further be reduced, and the likelihood that a sufficient amount of energy is generated in the energy harvesting mode can be increased.

If the (time filtered) wind speed is sufficiently within the operational range of the wind turbine, it may also be determined that the predefined condition is met. In an example, the predefined condition may for example comprise a first wind speed condition including the wind speed threshold (i.e. the first mentioned minimum and maximum threshold) and/or the wind speed range. It may further comprise a second wind speed condition (e.g. termed 'sufficient wind speed condition') including a second wind speed threshold and/or a second wind speed range. The second threshold or range may in particular be more strict than the first one. For example, the second wind speed threshold can include a second minimum cut-in wind speed threshold that is higher than the first mentioned minimum threshold, and can include a second maximum cut-in wind speed threshold that is lower than the first mentioned maximum threshold, and/or the second wind speed range may be narrower and may be arranged within the first mentioned wind speed range. The predefined condition may be met if the second wind speed condition is met. By such second wind speed condition, if the wind speed lies sufficiently within the operational range, it may thus not be necessary to check additional conditions and start-up of the wind turbine is likely to result in the desired amount of electrical energy production. As the second wind speed condition is stricter, the first wind speed condition will also be met. In particular, the second wind speed condition may be met if the (time filtered) wind speed indicated by the obtained wind data is above or below the respective second wind speed threshold, or within the second wind speed range.

In an example, the wind speed threshold and/or the wind speed range may be variable and may be determined based on an amount of energy stored in the energy storage system. It may thus be ensured that if only little energy is left in the storage system, the wind turbine transitions into the energy harvesting mode only if the chance is sufficiently high that a sufficient amount of electrical energy is generated.

For example, for a lower amount of stored energy, the wind speed threshold may be set to a stricter value and/or the wind speed range may be set to a narrower range. For a higher amount of stored energy, the wind speed threshold may be set to a less strict value, and/or the wind speed range may be set to a broader range. A stricter value may for example mean that the minimum threshold is set to a higher value (i.e. higher wind speeds are required before transitioning the operation mode of the wind turbine), and/or for a maximum threshold, the threshold may be set to a lower value (the transition occurs only at lower wind speeds). Accordingly, such adapted minimum and maximum thresholds may correspond to a narrower range. The time-filtered wind speed data may be compared to such adapted threshold/range to determine if the wind speed condition is met.

The wind speed threshold and/or the wind speed range may for example be a function of the amount of energy stored in the energy storage system. Accordingly, upon a change in the amount of stored energy, the threshold/range may be adapted in accordance with the function.

The function may for example be a linear function that depends linearly on the amount of stored energy. For example, the thresholds or the borders of the range may change linearly between a minimum value and a maximum value for the respective threshold/border in dependence on the amount of stored energy. As an example, the minimum cut-in wind speed threshold may change linearly from a lower predefined value, e.g. between 3 and 4 m/s, at higher amounts of stored energy to a higher predefined value, e.g. between 5 and 7 m/s, for lower amounts of stored energy. A corresponding linear change may occur for the maximum cut-in wind speed threshold, however in the opposite direction. Accordingly, at high levels of available stored energy, a start-up may be attempted at the earliest possible moment, as there is a sufficient amount of energy remaining if the start-up attempt is unsuccessful (e.g. if the wind speed drops again below a minimum cut-out threshold). At low levels of available stored energy, the start-up, i.e. transition into the harvesting mode, may only be attempted when it is certain that the start-up will be successful, i.e. generate a sufficient amount of energy. The function that defines the dependence of the respective threshold or range on the amount of stored energy may be based on the amount of energy consumed for the transition into the harvesting mode for the respective wind turbine, and an additional safety margin may be considered.

In an example, obtaining meteorological data may comprise obtaining forecasted wind conditions for a future period of time, for example by forecasting the wind conditions, modeling future wind conditions, obtaining forecasts of wind conditions from an external data source or the like. For example, wind speed, temperature, atmospheric pressure and/or other environmental parameters may be measured and may be used to model, forecast or predict the respective wind conditions. This may occur locally at the wind turbine, e.g. by a respective wind turbine controller, at wind farm level (wind farm controller) or at an external processing facility. Wind conditions may include the wind speed, and may optionally include wind direction.

Determining if the predefined condition is met may for example comprise comparing the forecasted wind conditions to the wind speed threshold and/or the wind speed range. Preferably, the predefined condition is met if at a future point in time, the forecasted wind conditions meet the wind speed threshold (above minimum threshold or below maximum threshold) and/or are within the wind speed range (which may be termed 'forecasted wind speed condition'). It may thus be possible to timely prepare the wind turbine for the transition, for example by powering up the respective auxiliary power consumers in due time prior to arrival of the respective wind speeds. For example, transitioning the operation of the wind turbine into the energy harvesting mode may comprise performing the transition prior to or at the future point in time. The transition may for example be initiated at the future point in time minus the time that is required for effecting the wind turbine transition procedure into the energy harvesting mode.

The forecasting or modeling may further consider wind direction, the time of the day, time of year, solar radiance, precipitation levels, and any historical trends of the disclosed parameter, e.g. of any of the sensors available for measuring respective parameters. It may further be based on weather forecasts obtained from an external data source. Forecasting of the wind conditions may for example be based on measured wind speeds, obtained meteorological information, information obtained from an external service, e.g. a weather service, and the like, and may in particular be model-based.

In an example, obtaining the meteorological data may include forecasting ice conditions. Respective ice conditions may be conditions in which rotor blade icing may occur. The forecasting of ice conditions may employ any of the above mentioned forecasting methods, and/or may use dedicated sensors and/or load monitoring methods that are adapted to detect the presence of ice on rotor blades.

Determining if the obtained environmental data meets a predefined condition may include adjusting the wind speed threshold and/or the wind speed range if the presence of ice conditions is detected or forecasted. Additionally or alternatively, if ice conditions are detected or forecasted, determining if the obtained environmental data meets a predefined condition may include determining that the condition is not met if respective icing is detected or forecasted, i.e. the wind turbine operation may not transition into the energy harvesting mode.

By the above described implementations, if the forecast predicts return of wind speeds to the operational range at a period in the future, a wake-up of the wind turbine may be scheduled for the individual wind turbine based on the time needed to start up and reach production (e.g. 5 minutes) and the expected arrival time of the wind conditions within the operational range. The wind turbines may thus be ready to start up without delay upon arrival of the wind conditions. For example on a wind farm level, individual wind turbines can be scheduled for start-up at different times, depending on when the respective wind conditions arrive at the respective wind turbine.

In an example, the obtained environmental data may be local to a location of the wind turbine or of a group of wind turbines. The transition may be performed individually for the wind turbine or the group of wind turbines based on the local environmental data for the respective wind turbine or group of wind turbines. A group of wind turbines may for example include 2, 3, 4 or more wind turbines, which may be arranged adjacent to each other. In particular, the wind turbines of the group may experience similar wind conditions.

The method may for example comprise transitioning the operational mode of wind turbines of a wind farm to the energy harvesting mode first for the wind turbines located nearest to an approaching change in wind conditions that are forecasted to meet the predefined criterion, and subsequently transitioning the operation of wind turbines located further away from the location at which the approaching change in wind conditions arrives first. The difference in time between the wake-up may correspond to the time needed by the wind speed change to proceed through the wind farm from the first location to the second location.

In a further example, determining if the predefined condition is met may comprise determining a continuous time period over which the forecasted wind conditions are (substantially) within the wind speed range. Determining if the predefined condition is met may further comprise estimating an amount of energy expected to be generated by the wind turbine within the continuous time period, and comparing the estimated amount of energy to the predetermined energy threshold. The predetermined energy threshold may be larger than an amount of energy required for transitioning the wind turbine operation from the first operational mode to the energy harvesting mode. The condition may be met if the estimated amount of energy meets or exceeds the predetermined energy threshold (which may be termed 'forecasted energy generation condition'). Accordingly, by ensuring that the expected energy production is larger than the amount of energy consumed during start-up, it may be ensured that the energy storage system is not depleted. The forecasted continuous time period may in particular allow for a restauration of the energy used for start-up. The energy threshold may further include an additional energy margin, for example between 20 and 100 percent, e.g. 40 to 60 percent of the amount of energy required for transitioning the wind turbine operation to the harvesting mode. It should be clear that the forecasted wind conditions may be time filtered, or smoothed, so that small and short outliers in the forecasted data may not result in an interruption of the forecasted continuous time period. If the time period is too short to produce a sufficient amount of energy, the condition is not met and no transition occurs.

As a further example, it may be determined that the predefined condition is met if the continuous time period exceeds a predetermined duration threshold (which may be termed 'forecasted harvesting period condition'). By such duration threshold, it may likewise be ensured that a sufficient amount of energy is generated after start-up of the wind turbine, although such threshold is less precise as it does not consider the actually generated amount of energy which depends on the expected wind speed.

It should be clear that the predefined condition may comprise one or a combination of the different conditions disclosed herein, and the predefined condition may for example be met if one of these comprised conditions is met. The predefined condition may for example include at least one of the combined wind speed/trend condition, the sufficient wind speed condition, the forecasted wind speed condition, the forecasted energy generation condition, and the forecasted harvesting period condition, and may preferably include at least two, three or more of these conditions. In some examples, the predefined condition may include at least the combined wind speed/trend condition and the sufficient wind speed condition. In other examples, the predefined condition may include at least the forecasted energy generation condition, and optionally the forecasted wind speed condition and/or the forecasted harvesting period condition. Accordingly, if one or more of these conditions included in the predefined condition is met, then the wind turbine may transition into the energy harvesting mode.

Determining if the predefined condition is met may be performed external to the wind turbine, for example by a wind farm controller or by a computing system external to the wind farm, but may also be performed by the wind turbine controller. In the former cases, the transition of the operation of the wind turbine may be effected by communicating respective control commands to the wind turbine.

In an example, if the wind turbine is operating in the energy harvesting mode and if a second predefined condition is met, the method may comprise causing the operation of the wind turbine to transition into the first operating mode. The second predefined condition may be similar to the first mentioned predefined condition, but may for example employ a cut-out threshold and/or cut-out wind speed range, for example a minimum cut-out wind speed below which the second criterion is fulfilled or a maximum cut-out wind speed above which the second criterion is fulfilled. The cut-out wind speed threshold and/or cut-out wind speed range of the second predefined condition may be different from the ones of the first mentioned predefined condition, in particular such that hysteresis is obtained so as to reduce the number of transitions between the first operating mode and the energy harvesting mode. In other words, the minimum cut-out wind speed threshold may be lower than the minimum cut-in wind speed threshold, the maximum cut-out wind speed threshold may be higher than the maximum cut-in wind speed threshold, and/or the cut-out wind speed range may be wider than the first mentioned wind speed range.

In an example, obtaining the meteorological data may comprise obtaining a forecast of wind conditions for a future period of time, wherein determining if the second predefined condition is met comprises comparing the forecasted wind conditions to the cut-out wind speed range and determining a second (continuous) time period in which the forecasted wind conditions are outside the cut-out wind speed range. If the wind turbine is operating in the energy harvesting mode and the second time period is shorter than a predefined maintaining time period, the operation of the wind turbine is maintained in the energy harvesting mode during the second time period. Accordingly, if the forecast predicts a short duration of wind speeds outside the operational range, the wind turbine may be prevented from shutting down, i.e. entering the first operational mode, if this time period is sufficiently short. In particular, the duration of the predefined maintaining time period may be determined on the basis of the amount of energy consumed during the start-up that would be required if the wind turbine is transitioned into the first operating mode. In particular, the time period may be selected such that energy saved by transitioning into the first operating mode, in which less energy is consumed, and back into the harvesting mode is less than the energy consumption if the operation is maintained in the harvesting mode during the second time period in which the low wind speeds prevail. Accordingly, by such measures, a further depletion of the energy storage system may be avoided.

It should be clear that this may be performed both if wind speeds are below or above the operational range of the wind turbine. If the wind speeds are above the operational range and the wind turbine is continued to operate in the energy harvesting mode, then conventional measures to protect the wind turbine from the high wind speeds may be taken, such as pitching out the rotor blades and the like, but the first group of auxiliary power consumers remains powered and active.

The method may further comprise increasing the amount of energy stored in the energy storage system when operating in the energy harvesting mode. As mentioned above, in the energy harvesting mode, the auxiliary power consumers of the first group are powered up and are operated, for example to align the wind turbine with the wind direction, to control the blade pitch and the like, using generated electrical energy (self-sustained operation).

The first group of auxiliary power consumers may include components not critical for determining wind conditions sufficient for returning to operation and/or components providing command and control capabilities (these may be comprised in the second group). For example, the auxiliary power consumers of the first group may comprise one or more actuators or drives configured to actuate a wind turbine component. The first group of auxiliary power consumers may comprise one or a combination of a yaw system of the wind turbine; a pitch system of the wind turbine; a hoisting system of the wind turbine; a service lift of the wind turbine; a cooling system of the wind turbine; and an environmental management system of the wind turbine (which may for example include temperature control and humidity control).

The second group of auxiliary power consumers may comprise one or more devices configured to provide communication and control of the wind turbine and to obtain wind conditions. For example, it may comprise a wind sensor of the wind turbine; a wind turbine controller; and/or a wind turbine communication device (which may for example provide external communication, e.g. receiving of data, such as the environmental data, and control commands from an external site). Accordingly, in the first operating mode, control and communication systems, and possibly sensor systems, may be operational so that the wind turbine can determine when to transition back into the energy harvesting mode, while energy consumption is kept small.

The auxiliary power consumers of the first group may have a combined power requirement of above 100 kW, for example of 100 to 1,000 kW, or 200 to 500 kW, e.g. between 250 and 400 kW. The auxiliary power consumers of the second group may have a combined power requirement of below 50 kW, preferably below 10 kW, for example between 0.1 kW and 10 kW, or between 0.2 kW and 5 kW, e.g. less than 2 kW. Significant power consumption savings can thus be achieved when operating in the first operating mode (e.g. sleep mode).

The auxiliary power consumers of the first group may have an operating voltage above 300 V, in particular between 300 V and 1.000 V. They may be powered by a three-phase power supply. The auxiliary power consumers of the second group may have an operating voltage of less than 300 V, for example between 100 and 250 V. They may be powered by a single phase supply, in particular as no large motors need to be driven. The above values may refer to the nominal power rating of the respective consumers, and the nominal voltage ratings.

The energy storage system may preferably be a re-chargeable energy storage system. It may comprise at least one of a battery energy storage system (BESS); a hydrogen storage system including a hydrogen storage device and a hydrogen conversion system configured to generate electrical energy from stored hydrogen; a flywheel energy storage system; a capacitor (e.g. super-capacitor) energy storage system; or a thermal storage system including a thermal storage device and a conversion system configured to generate electrical power from stored thermal energy. Preferably, a BESS or a hydrogen storage system are provided. In some examples, the energy storage system may comprise a fossil fuel driven electrical generator, wherein energy is stored in the form of fossil fuel (e.g. a Diesel generator); this is however less preferred as the energy storage cannot be recharged.

According to a further aspect, a wind turbine control system configured to control the operation of a wind turbine is provided, in particular for transitioning the operation of the wind turbine into an energy harvesting mode in which the wind turbine operates to generate electrical power from wind energy. An energy storage system associated with the wind turbine is configured to supply electrical power to an auxiliary system of the wind turbine when the wind turbine is not generating or receiving electrical power sufficient for supplying the auxiliary system. The control system may be configured to perform a method in accordance with any of the configurations and embodiments described herein.

According to a further aspect, a wind turbine comprising such control system and further comprising the energy storage system is provided. The energy storage system may be arranged within a tower of the wind turbine, for example on a tower platform within the tower, or adjacent to the tower.

According to a further aspect, a computer program for controlling the operation of a wind turbine is provided. An energy storage system associated with the wind turbine is configured to supply electrical power to an auxiliary system of the wind turbine when the wind turbine is not generating or receiving electrical power sufficient for supplying the auxiliary system. The computer program comprises control instructions which, when executed by a processing unit of a control system that controls the operation of the wind turbine, cause the processing unit to perform a method having any of the configurations described herein.

The method may be performed by the control system or wind turbine having any of the configurations described herein. The method may further comprise any of the steps described herein with respect to the control system or wind turbine.

Likewise, the control system may be configured to carry out the method of any of the embodiments and examples disclosed herein.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

BRIEF DESCRIPTION OF THE DRAWINGS

The foregoing and other features and advantages of the invention will become further apparent from the following detailed description read in conjunction with the accompanying drawings. In the drawings, like reference numerals refer to like elements.

Fig. 1 is a schematic drawing showing a wind turbine including a control system according to an example.

Fig. 2 is a schematic drawing showing the transition between different operating modes of the wind turbine according to an example.

Fig. 3 is a schematic drawing showing diagrams of wind speed, wind speed trend and as the meeting of a wind trend condition according to an example.

Fig. 4 is a schematic drawing showing a diagram that illustrates the dependency of a wind speed threshold on the amount of energy stored in an energy storage system of the wind turbine according to an example.

Fig. 5 is a first part of a flow diagram illustrating a method of controlling a wind turbine according to an example.

Fig. 6 is a second part of the flow diagram of figure 5.

DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

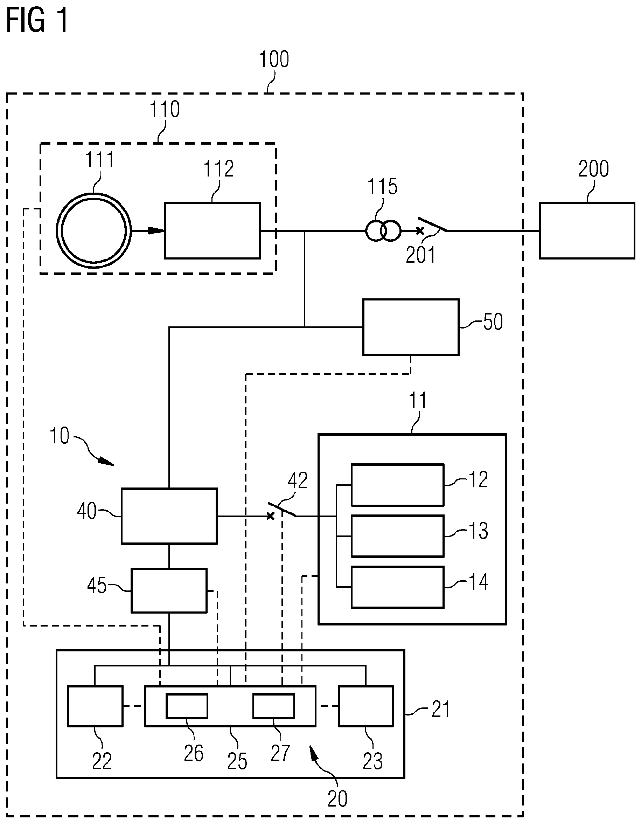

Fig. 1 schematically illustrates a wind turbine 100 according to an example, which may include a wind turbine electrical power system 110 comprising a generator 111 and a power conditioning system 112. Power system 110 may have any of the known configurations and topologies, such as a full converter topology or a doubly-fed induction generator (DFIG) topology in which the power conditioning equipment 112, in particular a power converter, may be connected to the rotor windings of the generator to condition the generated electrical power. Wind turbine transformer 115 may furthermore be provided which transforms the generated electrical power to the desired voltage level before it is supplied to the external power grid 200 or alternatively to one or more local consumers. In the example if Fig. 1, the wind turbine 100 is connected to an external power grid 200, e.g. a utility grid, wherein the external power grid 200 may in particular be a grid capable of supplying electrical power to the wind turbine 100, for example for keeping wind turbine 100 operational during periods of low wind or for maintenance work or in other situations in which the wind turbine does itself not generate electrical power. By means of a respective switch, in particular switchgear 201, the wind turbine 100 may be disconnected from external power grid 200, for example upon the occurrence of a grid fault or other events causing unavailability of the grid connection. In other examples, no connection to an external power grid 200 may be present at all (i.e. external grid 200 is optional). Such wind turbines may for example provide electrical power to one or more local consumers, wherein via such connection to local consumers, no electrical power can be supplied to the wind turbine 100. Such operation may also be termed island operation. The present solution provides a transition into a self-sustained operation of the wind turbine (energy harvesting mode) for wind turbines that are normally grid-connected but are disconnected from the grid for a given reason (e.g. by opening switch 201), for wind turbines that are normally not grid-connected and operate to supply power to electrical consumers within or nearby the wind turbine (local power consumers), or for wind turbines for which the power grid is not capable of supplying sufficient power for operating the wind turbine's auxiliary systems. By such self-sustained operation, damage or the potential for damage associated with long durations of wind turbine standstill may be avoided, and exposure of wind turbine components to outside ambient humidity and temperatures may be avoided, which is particularly important for offshore wind turbines.

When not grid-connected or grid-disconnected, the wind turbine 100 can be operated in an energy harvesting mode in which the power system 110 supplies the auxiliary system 10 including the auxiliary power network 40 and auxiliary power consumers 12-14; 22-25 with electrical power. However, a challenge of operating a wind turbine without a grid connection is that power from the wind is not always available to keep the auxiliary system 10 powered, for example when environmental conditions are outside the operating range of the wind turbine or there is a fault in one of the wind turbine systems necessary for power production. Environmental conditions that may affect operation of the wind turbine include wind speeds being too high or too low or ambient temperatures being too high or too low. Faults may include a failure of the wind turbine's pitch, yaw, monitoring, control or power conversion systems.

Auxiliary system 10 may include an energy storage system 50 configured to provide electrical energy for operating the auxiliary system 10 (at least parts thereof) when no power or not sufficient power is available from an external grid 200, and when no power is available from power system 110. Energy storage system 50 may provide electrical power into the auxiliary power network 40 which distributes it to the auxiliary power consumers. For example, a switch (not shown), e.g. a three-way switch, may be used to control the source of power for the auxiliary power network 40. Such switch may be switchable to transition the supply of power between the wind turbine electrical power system 110 and the energy storage system 50, and may further be switchable to disconnect both power sources from the auxiliary system, depending on the operating mode of the wind turbine.

The auxiliary power consumers may be separated into at least a first group 11 and a second group 21. At least the power supply to the first group 11, preferably to both groups 11, 21, may be individually controllable. Consumers of the first group 11 may generally not be critical for determination of wind conditions sufficient for returning the wind turbine to operation and/or for command and control capabilities. The first group 11 for example may include relatively large power consumers, e.g. having a relatively high nominal power rating, in particular one or more drives. Examples may be a yaw system 12, a pitch system 13 and a cooling system 14. Other systems comprised in first group 11 may include crane hoists, service lifts, high-power power outlets, and environmental systems, including an AC system controlling temperature and humidity within the wind turbine. The combined power rating of the auxiliary power consumers of first group 11 may for example lie within the range of 250 kW to 400 kW. Typically, the respective consumers may receive a three-phase AC voltage supply at a voltage range between 300 and 1.000 V, e.g. 400 V or 690 V. These consumers thus consume significant amounts of electrical power and are required to keep wind turbine 100 operational, for example to track the wind direction using the yaw drive 12 and to control the rotational speed of the rotor using the pitch system 13.

The second group 21 of auxiliary power consumers may include consumers that are critical for determining the presence of wind conditions that are sufficient for returning wind turbine 100 to operation and/or for command and control capabilities. Second group 21 may comprise low power consumers, i.e. having a relatively low nominal power rating, such as a wind turbine controller 25 and communication interface 23. It may further comprise monitoring system 22 of the wind turbine, which may comprise wind sensor(s); however, respective wind information may also be obtained by controller 25 via a communication interface 23 from sensors external to wind turbine 100. The second group 21 may in particular comprise auxiliary power consumers that receive a single phase electrical power supply having a voltage in a range between 100 and 300 V, for example 110 or 230 V. The consumers in second group 21 may have a combined nominal power rating between 0.1 and 10 kW, for example between 0.3 kW and 5 kW, preferably less than 2 kW or 1 kW. Although the auxiliary power consumers in this second group 21 cannot actually actuate any of the wind turbine's main mechanical systems, they are capable of controlling the operation of the wind turbine 100 and to communicate with the outside, for example for receiving control commands (e.g. from a wind farm controller), receiving environmental data, and/or for providing monitoring data.

The wind turbine controller 25 may form part of a control system 20 and may comprise a processing unit 26, which may comprise a microprocessor, an application specific integrated circuit, a digital signal processor or the like. It may further include a memory 27 coupled to the processing unit 26 and storing control instructions which when executed by the processing unit 26 cause the processing unit 26 to perform any of the methods described herein. Memory 27 may include volatile and non-volatile memory, in particular a hard disc drive, flash memory, RAM, ROM, EEPROM and the like. Wind turbine controller 25 may comprise further components not explicitly shown, such as the respective input/output interfaces to the components to be controlled, as indicated by dashed lines in Fig. 1, a user interface including a display and an input means, and other components common to a computer system. The communication interface 23 and/or the monitoring unit 22 may also form part of the control system 20.

In the example of Fig. 1, a switch 42 in form of a breaker may be connected between the energy storage system 50 and the first group 11 so as to control the supply of electrical power to the consumers of first group 11 independently from the consumers in second group 21. Power supply from energy storage system 50 to the auxiliary power consumers in the first group 11 may thus be stopped (ceased) to reduce the energy consumption. As explained in more detail further below, controller 25 can operate the wind turbine 100 in different operating modes in which the power supply may be selectively activated or deactivated to the consumers in first group 11.

A second and separate storage device in form of the uninterruptable power supply (UPS) 45 may optionally be connected in line on the power supply path from the energy storage system 50 to the consumers of the second group 21. By means of such UPS, it can be ensured that power interruptions of short duration, such as a transition between power sources (e.g. via a respective switch) or faults in either of the available power supply systems do not lead to an immediate loss of wind turbine control, monitoring and/or communication capabilities.

The energy storage system 50 can be implemented in several different ways. Implementation may in particular include a battery energy storage system (BESS), as shown in figure 1, and a hydrogen storage system. However, other implementations or examples are conceivable, such as a flywheel storage system, a (super)capacitor storage system, a thermal storage system and the like, or even a Diesel generator. It is preferred that the system 50 is rechargeable. The explanations provided herein are applicable to any of these possible implementations or examples. If implemented as a hydrogen storage system, the wind turbine 100 may comprise a hydrogen production system that uses electrical power provided by electrical power system 110 to produce hydrogen gas during wind turbine operation. Such hydrogen production system may receive water from a water source and produce hydrogen gas by means of electrolysis. The produced hydrogen gas may then be stored in a hydrogen reservoir in the wind turbine and/or in an external hydrogen collection tank (not shown). The energy storage system 50 may further comprise a fuel cell that produces electrical energy from the hydrogen stored in the reservoir and provides it to auxiliary network 40.

The control system 20 of the wind turbine 100 may comprise the wind turbine controller 25 which can control and/or communicate with several components of the wind turbine, including the communication interface 23, the monitoring unit 22, the energy storage system 50, the electrical power system 110, the switch 42, the UPS 45, and the auxiliary system 10, in particular the consumers in the first group 11 and the second group 21. It may further control the switch 201 for disconnecting the wind turbine from an external grid 200, the wind turbine transformer 115, and other components of wind turbine 100, whereas respective control and communication connections are not shown in Fig. 1.

It should be clear that topologies other that the one shown in figure 1 may be employed with the solution disclosed herein. For example, the energy storage system 50 may be connected as an online UPS and include a bypass (avoiding the need for UPS 45), or may be connected to feed the UPS 45 (if only the second group 21 is to be powered, thus not requiring switch 42); other configurations are also conceivable and within the scope of the present disclosure.

Control system 20 can operate the wind turbine 100 in an energy harvesting mode in which the electrical power system 110 supplies all or most (more than 50%, 70% or 90%) of the electrical power required for operating the auxiliary system 10, i.e. it generates the electrical power from wind energy. In such operating mode, both groups 11 and 21, and preferably all auxiliary power consumers, are supplied with electrical power. The energy harvesting mode may in particular be a self-sustained operating mode.

If the conditions are not given for the wind turbine 100 to operate in such harvesting mode (e.g., wind speeds outside operating range), the control system 20 may operate the wind turbine 100 in a first operating mode, which may be or may comprise a sleep mode. In this first operating mode, the power supply to the first group 11 may be stopped, and the second group 21 may receive all or most (more than 50%, 70% or 90%) of the electrical power from the energy storage system 50. In particular, power system 110 may not supply any electrical power, and no electrical power may be received from a power grid 200 (if such grid is present at all). Such operating mode may accordingly keep the monitoring and control functionality of the wind turbine 100 active, while the energy consumption is kept low, as the main auxiliary loads of group 11 are not supplied with electrical power.

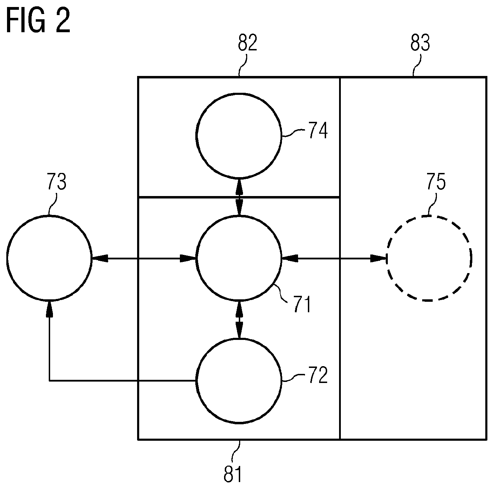

Control system 20 may operate wind turbine 100 in further operating modes, as illustrated in figure 2. If wind turbine 100 is connected to a grid 200 (if present), the wind turbine may be operated in a grid mode 75 that may include the conventional operational states of a grid-connected wind turbine. In the grid mode 75, the energy storage system 50 may be charged to or maintained at a fully charged state using power from the grid or generated power. Grid mode 75 is optional and not available for wind turbines that do not comprise a grid connection. Monitoring unit 22 may monitor the grid status, and when it is detected that the grid is no longer available or is disconnected, may cause operation of the wind turbine to transition into a grid-disconnected operation described below. In mode 75, the wind turbine may operate in a regime 83 in which electrical power is supplied to the auxiliary system 10 from the external power grid.

Wind turbine 100 may be further operable in the above described energy harvesting mode 74 in which the generator 111 converts rotational mechanical power from the wind turbine rotor into electrical power that is supplied to auxiliary system 10 including energy storage system 50 and possibly to a local load (self-sustained operating regime 82).

In operating regime 81, the auxiliary system 10, or at least components thereof, may be provided with electrical power from the energy storage system 50. In operating regime 81, the electrical power system 110 may not generate electrical power, and the wind turbine may not receive electrical power from grid 200 (if present), or at least not a sufficient amount of power for powering the auxiliary system 10 (e.g., less than 50%, 20% or 10% of the required power). Operating modes in this regime 81 may comprise the first operating mode 72 (sleep mode) and may further comprise a so called local power mode 71 (second operating mode). In the local power mode, both groups of auxiliary power consumers 11, 21, preferably all auxiliary power consumers, may be supplied with electrical power from the energy storage system 50. Furthermore, the wind turbine may be operable in a hibernate mode 73 (third operational mode), in which the auxiliary system 10 may not be supplied with electrical power, but the wind turbine may be essentially shut down completely.

The arrows in Fig. 2 illustrate possible transitions between these operating modes. When not connected to an external power grid and prior to starting the harvesting of energy, the wind turbine may operate in the local power mode 71. This mode may be provided to initiate operation of the wind turbine, or to keep the wind turbine in a state ready for energy production. For example, wind tracking may be performed to establish wind turbine rotor alignment with the wind (operation of yaw system), and system cooling (circulation of cooling fluid), heating and de-humidification may be likewise powered. The power conditioning equipment 112 may further be prepared for operation (e.g. charging DC link capacitors), and hydraulic systems, e.g. of a pitch system, may be set under pressure. If a start-up of the wind turbine is to be initiated, the pitch system 13 of the wind turbine may be operated to allow the rotor speed to accelerate. If the wind turbine rotor reaches the cut-in rotor speed, operation may transition into the energy harvesting mode 74. Accordingly, when transitioning from sleep mode 72 to the energy harvesting mode 74, such transition may occur via local power mode 71, i.e. the transition may include operating the wind turbine in the second operating mode 71. It should be clear that this transition is associated with a significant consumption of energy from storage system 50, since the large loads of group 21 need to be operated.

Transition into the hibernate mode 73 may occur upon the amount of energy in storage system 50 reaching a minimum level, in order to ensure that the energy storage system is not further depleted and that sufficient energy for a manual start-up is available. Transition from the grid connected operating mode 75 to the grid-disconnected self-sustained operating mode 74 may likewise occur via the local power mode 71.

To reduce energy consumption for storage system 50 and thus the risk of depleting the available energy, the transition from the sleep mode 72 into the energy harvesting mode 74 may occur upon the control system 20 determining that a predefined condition is met. Failed start-up attempts may thus be avoided. In particular, the predefined condition may be selected such that the likelihood for recovering more energy in the harvesting mode than needed for the startup attempt (**i.e.** for the transition) is increased. A wake-up sequence, **i.e.** a transition into mode 74, may consume stored energy in the range of 15 kWh to 20 kWh, depending on the turbine size and type.

The wind turbine may be prevented from operating in the energy harvesting mode 74 due to a command from a user to stop power production; occurrence of a fault; wind speeds too low for power production; wind speeds too high for power production; and/or other environmental conditions preventing such operating. When any of these occur, the control system may transition the wind turbine operation into the sleep mode 72 to ensure that a low level of power is consumed from the energy storage system 50, while maintaining supply to systems necessary for a return to operation. While in sleep mode, if the wind turbine has stopped due to a fault or a user command, then the fault will need to be cleared, and any user commands will need to be released to allow a return to operation. If the wind turbine has stopped due to wind speeds (too high or too low), then the monitoring unit 22 may continue to monitor the wind conditions, or these may be obtained via communication interface 23, while in sleep mode and the wind turbine controller 25 may determine when to attempt a restart of the wind turbine.

In order not to react on rapid changes of the wind speed that can be unreliable and cause the turbine to start up from short gusts (if stopped for low wind) or drops (if stopped for high wind), a time-filtering of the measured or received wind speed data may be employed. The time-filtered wind speeds can be an average, in particular a moving average, for example a moving window average with a window length of 1s to 10.000s, preferably 50s to 1000s, e.g. between 100 and 200s.

When this filtered windspeed $v_{filter}$ is above a minimum cut-in wind speed threshold $thresh_{min\_cut-in}$ (when it was stopped due to low wind; abbreviated minimum threshold), then a restart of the wind turbine is possible. Similarly, for the case of stoppages due to high wind speed, a maximum cut-in wind speed threshold $thresh_{max\_cut-in}$ may be employed (abbreviated maximum threshold). A wind speed condition may thus be defined that is met if

$$v_{filter} > thresh_{min\_cut-in}$$

(when coming from low wind speeds) or

$$v_{filter} < thresh_{max\_cut-in}$$

(when coming from high wind speeds)

Accordingly, these thresholds may define a wind speed range of cut-in wind speeds, wherein the wind speed condition is met if the filtered wind speed enters this cut-in wind speed range.

Further, to avoid that a brief exceeding of the respective threshold results in a start-up attempt, the trend of the wind speeds $v_{trend}$ in the past may be considered (historical trend). The historical trend windspeed may be obtained from a combination of time-filtered windspeeds. For example, it may be determined by a difference of the current values of the time-filtered wind speeds filtered with different window lengths:

$$V_{trend} = V_{filter(length1)} - V_{filter(length2)}$$

wherein the filter length may for example be length1 = 120s and length2 = 600s. Instead of using different filter lengths, it should be clear that any other known method for determining the trend may also be used, such as the difference between two averages of the same length at two different points in time, curve fitting or the like. A wind speed trend condition may thus be defined, which is met if

$$v_{trend} > thresh_{trend\_min}$$

(when coming from low wind speeds) or

$$v_{trend} < thresh_{trend\_max}$$

(when coming from high wind speeds)

The trend threshold may be set to any wind speed ranging from 0 to 99 m/s or 0 to -99 m/s, respectively.

For example, the limits for the minimum wind speed threshold and the maximum wind speed threshold may be set to

$$thresh_{min\_cut-in} = 3.5 \ m/s$$

$$thresh_{max\_cut-in} = 22 \ m/s$$

and the wind speed trend thresholds may be set to

$$thresh_{trend\_min} = 0 \ m/s$$

$$thresh_{\text{trend\_max}} = 0 \text{ m/s}$$

A trend threshold of 0 m/s means that when entering the operational range from low wind speeds, the wind speed trend must be positive, and when entering the operational range from high wind speeds, the wind speed trend must be negative (i.e. historically falling wind speed). It should be clear that the trend condition may be set stricter by choosing higher/lower values as trend thresholds, e.g. $thresh_{\text{trend\_min}}$ = 1, 2, or 3m/s, and $thresh_{\text{trend\_max}}$ = -1, -2 or -3 m/s.

The predefined condition upon which the transition into the energy harvesting mode occurs may be met if both the wind speed condition and the wind speed trend condition are met.

Further, if the time-filtered wind speed is sufficiently within the operating range, a second wind speed condition may be defined which includes second thresholds having a sufficient safety margin to the thresholds of the above first-mentioned wind speed condition, i.e. the respective range defined by the second thresholds is narrower and within the range defined by the above-mentioned first thresholds. The historical wind speed trend may not be considered if such second wind speed condition is met (which may be termed "sufficient wind speed criterion"). Such second wind speed condition may for example be used after a period of shutdown (operation in sleep mode) due to a user command or a turbine failure scenario. The second wind speed condition may be met if

$$v_{\text{filter}} > thresh\_suff_{\text{min\_cut-in}}$$

(when coming from low wind speeds) or

$$v_{\text{filter}} < thresh\_suff_{\text{max\_cut-in}}$$

(when coming from high wind speeds)

wherein $thresh\_suff_{\text{min\_cut-in}}$ is the second minimum cut-in wind speed threshold (sufficient wind conditions) and $thresh\_suff_{\text{max\_cut-in}}$ is the second maximum cut-in wind speed threshold (sufficient wind conditions). The thresholds may be set more strictly (i.e. further within the operating range) than the above mentioned first thresholds, for example to

$$thresh\_suff_{\text{min\_cut-in}} = 6 \text{ m/s}$$

$$thresh\_suff_{\text{max\_cut-in}} = 20 \text{ m/s}$$

Accordingly, when the time filtered wind speed rises above this second minimum threshold or drops below this second maximum threshold, the second wind speed condition and thus the predefined condition may be met, so that the control system 20 may cause the wind turbine to transition into the energy harvesting mode 74.

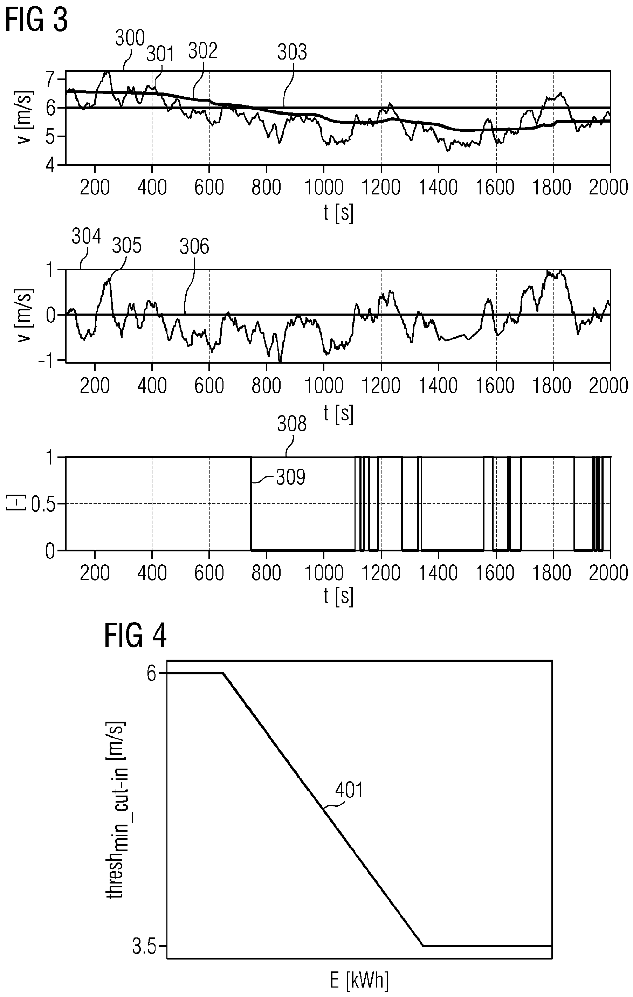

Figure 3 illustrates in the upper diagram 300 an exemplary wind speed filtered with a window length of 120s (curve 301) and with a window length of 600s (curve 302). Further, a second wind speed threshold ($thresh\_suff_{\text{min\_cut-in}}$) is shown (curve 303). In the second diagram 304, a value of the wind speed trend (curve 305) is shown that is determined as indicated above from the curves of the first diagram 300. Further, a wind speed trend threshold 306 ($thresh_{\text{trend\_min}}$) is illustrated. The third diagram 308 illustrates a Boolean value for whether the combined first wind speed condition and wind speed trend condition are fulfilled, based on the data in diagrams 300 and 304 (minimum wind speed threshold of 3.5 m/s). Although the minimum threshold is always met, it can be seen from diagram 304 that the trend condition is only met for parts of the curve (Boolean value of 1). It should be clear that the wind turbine would transition into the energy harvesting mode as soon as the Boolean value becomes 1, and then continue to operate therein until the wind speed falls below a minimum cut-out threshold (or raises above a maximum cut-out threshold); the changes in the Boolean value shown in diagram 308 are thus not transitions of the operating mode.

The energy consumed by a transition into the energy harvesting mode (wake-up attempt) can be an important factor as it should be plausible that the energy consumed when performing the wake-up can be restored once the wind turbine is operating to produce power. At low levels of stored energy in storage system 50, the wind conditions should be well within the operational windspeed range to ensure that a long duration of operation will occur after the wake-up. This may be accounted for by using the energy available in the energy storage system 50 for determining the above-mentioned wind speed thresholds. The thresholds $thresh_{\text{min\_cut-in}}$ and $thresh_{\text{max\_cut-in}}$ may for example be selected in dependence on, in particular as a function of, the amount of energy stored in storage system 50. An example of such a function is shown in Figure 4 with curve 401 for the low wind wake-up situation, i.e. the minimum threshold. The x-axis illustrates the amount of energy available, and the y-axis the value of the minimum threshold. The value for the minimum threshold may vary from 3.5 m/s when the available energy is at a maximum to 6 m/s when the available energy is at a minimum.

Accordingly, at high levels of available energy, startup may be attempted at the earliest possible moment since there will be plenty of energy remaining if the startup attempt is unsuccessful. At low levels of available energy, startup will only be attempted when it is certain that the startup will be a success. The curve 401 may be defined based on the amount of energy consumed for a wake-up attempt for a given turbine type, with a safety margin added. It should be clear that these are only exemplary values, and that the values may be selected in dependence on the desired operating properties and conditions.

Besides the above combined wind speed/trend condition and the sufficient wind speed condition, the control systems 20 may employ further conditions as part of the predefined condition to transition operation into the energy harvesting mode. For example, weather forecasting may be employed, and wind conditions may in particular be forecasted. Such forecasting may be based on local measurements made at the wind turbine using unit 22 and/or meteorological information obtained via communication interface 23. Monitoring unit 22 may include sensors for monitoring not only wind speed and direction, but also temperature and atmospheric pressure. Based on these signals, a weather forecasting model may be used by control system 20 to make forecasts and/or to make predictions of upcoming wind conditions. Such model may be executed using the wind turbine controller 25 and/or a wind farm controller (not shown) external to the wind turbine 100, which may form part of the control system 20. Other signals may also be used as input to such model, for example the time of day, time of year, solar irradiance, precipitation levels, and any historical trends of any of the available sensor data or external data.

The forecasting or obtained forecasted data may also account for the risk of rotor blade icing that could render the above-mentioned conditions less reliable. Ice detection may also be carried out using sensors of unit 22, or load monitoring methods may be performed by unit 22 to detect the presence of ice. If icing on the rotor is detected, control system 20 may for example prevent a wake-up from sleep mode 72 or offset the required wind speed for wake-up, i.e. set stricter values for the respective wind speed thresholds or range (e.g. higher minimum threshold or lower maximum threshold).

As an alternative or in combination with a model-based forecast, meteorological information from an available weather service may be obtained via communication interface 23 and may be used to forecast wind conditions and/or icing conditions. This forecasted information may be communicated from the wind farm controller to the wind turbine controller 25, or it may be processed external to the wind turbine controller (e.g. by the wind farm controller) and only basic command signals (e.g. signal for transitioning the operating mode) may be communicated to the wind turbine 100. If the weather forecast information is processed external to the wind turbine controller 25, e.g. by checking if respective conditions are met, further benefits may be obtained, e.g. by coordinating the wake-up of the wind turbines from sleep mode.

It may be checked if the forecast predicts a return of windspeeds to the operational range at a point in time or time period in the future by comparing the forecasted wind speed (which may be filtered at a respective time constant or may already be smoothed, depending on the model used) to respective wind speed thresholds, e.g. the above-mentioned minimum threshold and/or maximum threshold. The forecasted data may further allow an estimation regarding how long, e.g. for which continuous period of time, the wind speed is expected to stay within the operational range, i.e. not drop below a minimum cut-out windspeed or raise above a maximum cut-out windspeed. Wind speed trend may thus not be considered for forecasted wind speed data. A transition into the energy harvesting mode (wake-up) may be scheduled for the individual wind turbine(s) based on the time needed to start-up and reach production (e.g. 5 minutes) and the expected arrival time of the respective wind conditions that allow the transition. In this way, the wind turbines may be ready to start up without delay once the wind conditions allow. Also, for a larger wind farm, wind turbines on the side of the farm nearest to approaching change in wind conditions may be commanded by the control system to wake-up from sleep mode earlier and then subsequent wind turbines may be caused to wake up based upon the forecasted rate at which the wind speed change (i.e. wind speeds meeting the condition) is expected to proceed through the wind farm.

Besides checking if forecasted wind speeds are within respective wind speed thresholds, expected energy production may also be considered. When the forecast predicts a short time period in which windspeeds return to the operational range at a point in time in the future, the amount of energy consumed during startup may be compared to an expected amount of energy generated by the wind turbine during this time period in which production will be possible. If the expected energy generation will allow for a restoration of the energy used for transitioning the operation (i.e. for re-charging the energy storage system at least to the previous level), plus a predefined margin (for example at least 30%, 40% or 50% of the required energy for the transition), then the wind turbine may be commanded by control system 20 to wake-up and perform the transition, for example as described above. For this purpose, the expected amount of generated energy may be compared to a respective energy threshold, which may include the amount required for restoration and the margin, and transition occurs if the expected amount is larger than the threshold. If the time period is too short and the expected energy production not sufficient to restore the energy consumed during start-up, then a wake-up command may not be issued. Such operation may accordingly ensure that the energy storage system 50 is not depleted.

When the wind turbine is already operating in energy harvesting mode 74, and the forecast predicts a time period of windspeeds outside the operational range, the amount of energy may be estimated that the wind turbine would consume if it stays operational over this time period without transitioning into the sleep mode 72 (i.e. when continuing operation in the local power mode 71). This estimated amount of energy may be compared to the amount of energy required for operating the wind turbine in sleep mode over this period of time and for transitioning operating into and out of the sleep mode. If less energy is estimated to be required for not transitioning into the sleep mode, then operation may continue during this time period without such transition into sleep mode 72 (the wind turbine may for example briefly transition into mode 71 when wind conditions are outside the operating range and then transition back into energy harvesting mode 74). Avoiding such transition into the sleep mode for short time periods may result in further energy savings.

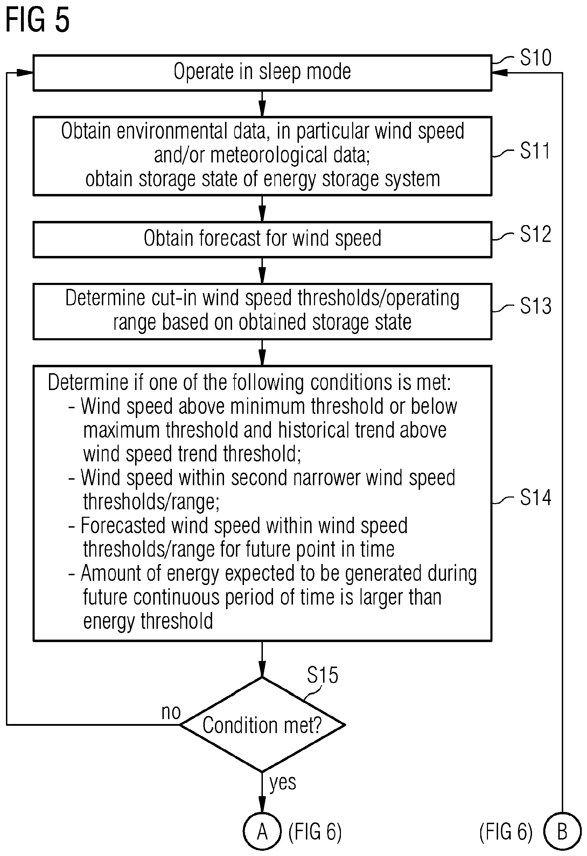

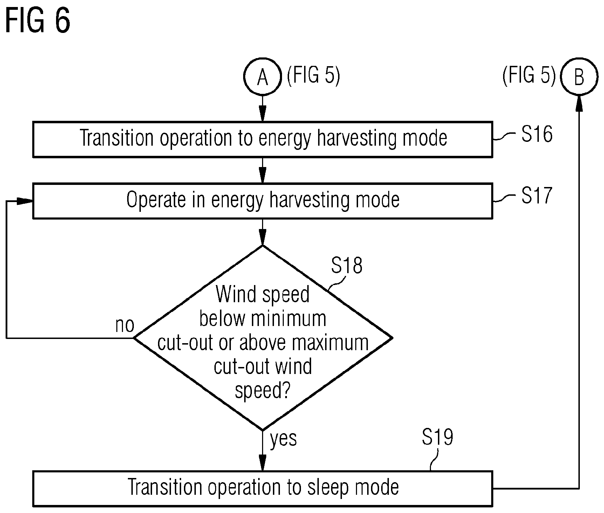

The flow diagram of figures 5 and 6 summarizes a respective operation of wind turbine 100, wherein the method may be performed by control system 20 controlling the operation of wind turbine 100. In step S10, the wind turbine may operate in the sleep mode. In step S11, environmental data may be obtained, for example by measuring wind speed and optionally other data, e.g. meteorological data using monitoring unit 22, and/or receiving respective data via communication interface 23. Further, the storage state of energy storage system 50 may be obtained to estimate the amount of available energy. In step S12, a forecast for wind speed may be obtained, for example by modelling the wind speed based on the obtained meteorological data, or by receiving respective forecasted data via interface 23. In step S13, the minimum and maximum thresholds (or correspondingly the respective cut-in wind speed range) may be determined on the basis of the amount of energy stored in storage system 50, e.g. as described above with respect to figure 4.

In step 14, it may be checked if the predefined condition is met. As outlined in detail above, this may include the checking of several conditions, and the predefined condition may be met if one of these conditions is met. The checking may for example include the checking of the combined wind speed/wind speed trend condition; the checking of the sufficient wind speed condition (second narrower wind speed range); the checking of a future wind speed condition, i.e. if forecasted wind speeds meet respective wind speed thresholds/range; and the checking if an amount of energy estimated to be generated in a future period of time (in which wind conditions are forecasted to be within operating range) is larger than a respective predetermined energy threshold. In step S15, it may be determined if one of these conditions, and thus the predefined condition, is met. If this is not the case, then operation may continue in the sleep mode in step S10.

If one of the conditions is met in step S15, the controller may cause the transition of the operation into the energy harvesting mode in step S16. Step S16 may for example include operation in the local power mode 71 in order to power up the required wind turbine systems, to start tracking of the wind using the yaw drive and to start rotor acceleration using the pitch drive. In step S17, the transition has been completed and the wind turbine may operate in the energy harvesting mode 74. In step S18, a condition may be checked if the energy harvesting mode should be quit, for example if the wind speed drops below a minimum cut-out wind speed threshold or raises above a maximum cut-out wind speed threshold. It should be clear that the cut-out thresholds may be set differently from the cut-in thresholds, they may in particular be set to a lower value (for minimum cut-out) or a higher value (for maximum cut-out). In other words, a certain degree of hysteresis may be provided, so as to avoid frequent changes between the sleep mode and the energy harvesting mode. Other conditions which may be checked in step S18 and which may cause the wind turbine to leave the energy harvesting mode may include occurrence of a fault on the wind turbine prohibiting operation; receiving of an operator command to stop operation; determining that (regularly occurring) self-preservation activity is required (such as untwisting of tower cables, automated diagnosis of safety systems, etc.); and/or determining that the energy storage system is fully charged.

If the condition is not met in step S18, e.g. wind speeds are still within the operational range, then operation may continue in the energy harvesting mode of step S17. Otherwise, operation may transition back into the sleep mode of step S10. As outlined above, such transition may likewise occur via the local power mode 71 (e.g. to safely decelerate the wind turbine rotor etc.). Also, as indicated above, if the wind speed drops outside the operating range only for a sufficiently short period of time, which may also be checked in step S18, operation may continue in the energy harvesting mode in step S17.

It should be clear that some of the steps illustrated in figures 5 and 6 are optional, such as steps S12 (no forecasted data may be used) or S13 (the thresholds may not be adapted). In other examples, only forecasted data may be used, and the other steps of the method and respective conditions may not be employed. Preferably, the method may base the decision on the transition on the forecasted data, in particular forecasted wind speeds, if such forecasted data is available with sufficient quality (e.g. sufficient degree of reliability), and if not, may base the decision on the actual monitored data, for example using the combined wind speed/trend condition and the sufficient wind speed condition. A reliable operation that minimizes the risk of depletion of energy storage system 50 may thus be achieved. Performing failed re-start attempts of the wind turbine in a quick succession, which may deplete the energy storage system 50, may in particular be avoided.

It should be clear that the control system 20 may include the wind turbine controller 25, which may perform the above-described method. It may additionally or alternatively comprise a wind farm controller, which may perform the above-described method, e.g. by sending respective control signals to one or more wind turbines to cause the transition of the operating mode. Also, the control system 20 can be implemented as a distributed control system, wherein some functions may be performed by a wind farm controller (e.g. wind speed forecasting), while other functions may be performed by the wind turbine controller 25 (e.g. monitoring and evaluating wind speed data; causing the transition of the operating mode). Other implementations are conceivable. While specific embodiments are disclosed herein, various changes and modifications can be made without departing from the scope of the invention.

**EP 4 392 667 B1**

Claims

1. A method for transitioning the operation of a wind turbine into an energy harvesting mode in which the wind turbine (100) operates to generate electrical power from wind energy, wherein an energy storage system (50) associated with the wind turbine (100) is configured to supply electrical power to an auxiliary system (10) of the wind turbine when the wind turbine is not generating or receiving electrical power sufficient for supplying the auxiliary system (10), wherein the method comprises:

    - operating the wind turbine (100) in a first operating mode (72) in which the wind turbine (100) is not generating electrical power from wind energy, wherein in the first operating mode (72), an electrical power supply to a first group (11) of one or more auxiliary power consumers (12, 13, 14) of the auxiliary system (10) is ceased, and in which a second group (21) of one or more auxiliary power consumers (22, 23, 25) of the auxiliary system (10) is supplied with electrical power from the energy storage system (50);
    - obtaining environmental data including at least one of wind data and meteorological data;
    - determining if the obtained environmental data meets a predefined condition, wherein the predefined condition includes at least one of a wind speed threshold, a wind speed range in which the wind turbine (100) is operable to generate electrical power, a wind speed trend threshold (306), or a predetermined energy threshold for an expected energy generation; and
    - if the predefined condition is met, causing a transition of the operation of the wind turbine (100) into the energy harvesting mode (74), wherein transitioning the operation into the energy harvesting mode (74) comprises supplying electrical power from the energy storage system (50) to the one or more auxiliary power consumers (12, 13, 14) of the first group (11), and

    **characterized in that**
    the predefined condition includes the wind speed trend threshold (306) and wherein determining if the predefined condition is met comprises comparing a trend of the wind speed (305) derived from the obtained wind data to the wind speed trend threshold (306), wherein the trend indicates whether the wind speed is increasing over time or decreasing over time.

2. The method according to claim 1, wherein the wind speed threshold of the predefined condition includes a minimum cut-in wind speed threshold at or above which the wind turbine (100) is operable to produce electrical power, and/or a maximum cut-in wind speed threshold at or below which the wind turbine (100) is operable to produce electrical power.

3. The method according to claim 1 or 2, wherein obtaining the environmental data comprises obtaining wind speed data and time-filtering the wind speed data, wherein determining if the predefined condition is met preferably comprises comparing the time-filtered wind speed data (301) to the wind speed threshold and/or to the wind speed range.

4. The method according to any of the preceding claims, further comprising deriving the trend of the wind speed (305) by comparing time-filtered wind speed data filtered with a first time constant to time-filtered wind speed data filtered with a second time constant, or comparing an averaged wind speed obtained from the wind speed data for a first point in time to an averaged wind speed obtained from the wind speed data for a second point in time different from the first point in time.

5. The method according to any of the preceding claims, wherein the predefined condition comprises a wind speed condition including said wind speed threshold and/or said wind speed range and further comprises a wind speed trend condition including said wind speed trend threshold, wherein the predefined condition is met if the wind speed condition and the wind speed trend condition are met.

6. The method according to any of the preceding claims, wherein the predefined condition comprises a first wind speed condition including said wind speed threshold and/or said wind speed range and further comprises a second wind speed condition including a second wind speed threshold (303) and/or a second wind speed range,

    wherein the second wind speed threshold (303) is higher than said wind speed threshold if said wind speed threshold is a minimum threshold, and wherein the second wind speed threshold is lower than said wind speed threshold if said wind speed threshold is a maximum threshold, and/or wherein the second wind speed range is narrower than and is arranged within said wind speed range, respectively,
    wherein the predefined condition is met if the second wind speed condition is met.

7. The method according to any of the preceding claims, wherein the wind speed threshold and/or the wind speed range is variable and is determined based on an amount of energy stored in said energy storage system.

8. The method according to claim 7, wherein for a lower amount of stored energy, the wind speed threshold is set to a stricter value and/or the wind speed range is set to a narrower range, and wherein for a higher amount of stored energy, the wind speed threshold is set to a less strict value and/or the wind speed range is set to a broader range.

9. The method according to any of the preceding claims, wherein obtaining said meteorological data comprises obtaining a forecast of wind conditions for a future period of time, and

> wherein determining if the predefined condition is met comprises comparing the forecasted wind conditions to the wind speed threshold and/or the wind speed range,
> wherein preferably, the predefined condition is met if at a future point in time, the forecasted wind conditions meet the wind speed threshold and/or are within the wind speed range.

10. The method according to any of the preceding claims, wherein obtaining said meteorological data comprises obtaining a forecast of wind conditions for a future period of time, wherein determining if the predefined condition is met comprises determining a continuous time period over which the forecasted wind conditions are within the wind speed range,

> wherein determining if the predefined condition is met further comprises:
>
> - estimating an amount of energy expected to be generated by the wind turbine (100) within said continuous time period,
> - comparing the estimated amount of energy to the predetermined energy threshold, wherein the predetermined energy threshold is larger than an amount of energy required for transitioning the wind turbine operation from the first operational mode (72) to the energy harvesting mode (74), wherein the condition is met if the estimated amount of energy meets or exceeds the predetermined energy threshold,
>
> and/or further comprises
>
> - determining that the condition is met if the continuous time period exceeds a predetermined duration threshold.

11. The method according to any of the preceding claims, wherein the obtained environmental data is local to a location of the wind turbine (100) or of a group of wind turbines, wherein the transition is performed individually for the wind turbine (100) or the group of wind turbines based on the local environmental data for the respective wind turbine (100) or group of wind turbines.

12. The method according to any of the preceding claims, wherein if the wind turbine (100) is operating in the energy harvesting mode (74) and if a second predefined condition is met, the method comprises causing the operation of the wind turbine (100) to transition into the first operating mode (72),

> wherein preferably, obtaining said meteorological data comprises obtaining a forecast of wind conditions for a future period of time, wherein determining if the second predefined condition is met comprises
>
> - comparing the forecasted wind conditions to a cut-out wind speed range; and
> - determining a second time period in which the forecasted wind conditions are outside the cut-out wind speed range,
>
> wherein, if the wind turbine (100) is operating in the energy harvesting mode (74) and the second time period is shorter than a maintaining time period, the operation of the wind turbine (100) is maintained in the energy harvesting mode (74) during said second time period.

13. A wind turbine control system configured to control the operation of a wind turbine (100) for transitioning the operation of the wind turbine into an energy harvesting mode (74) in which the wind turbine (100) operates to generate electrical power from wind energy, wherein an energy storage system (50) associated with the wind turbine (100) is configured to supply electrical power to an auxiliary system (10) of the wind turbine when the wind turbine (100) is not generating or receiving electrical power sufficient for supplying the auxiliary system (10), wherein the control system (20) is configured to perform the method according to any one of claims 1-12.

14. A computer program for controlling the operation of a wind turbine, wherein an energy storage system (50) associated with the wind turbine (100) is configured to supply electrical power to an auxiliary system (10) of the wind turbine when the wind turbine (100) is not generating or receiving electrical power sufficient for supplying the auxiliary system (10), wherein the computer program comprises control instructions which, when executed by a processing unit (26) of a control system (20) that controls the operation of the wind turbine (100), cause the processing unit (26) to perform the method of any one of claims 1 to 12.

## Patentansprüche

1. Verfahren zum Übergang des Betriebs einer Windturbine in einen Energieerntemodus, in dem die Windturbine (100) betrieben wird, um elektrische Leistung aus Windenergie zu erzeugen, wobei ein Energiespeichersystem (50) assoziiert mit der Windturbine (100) dazu konfiguriert ist, elektrische Leistung an ein Hilfssystem (10) der Windturbine zu liefern, wenn die Windturbine keine elektrische Leistung erzeugt oder empfängt, die zum Beliefern des Hilfssystems (10) ausreichend ist, wobei das Verfahren Folgendes umfasst:

   - Betreiben der Windturbine (100) in einem ersten Betriebsmodus (72), in dem die Windturbine (100) keine elektrische Leistung aus Windenergie erzeugt, wobei in dem ersten Betriebsmodus (72) eine elektrische Leistungslieferung an eine erste Gruppe (11) von einem oder mehreren Hilfsleistungsverbrauchern (12, 13, 14) des Hilfssystems (10) eingestellt wird und in dem eine zweite Gruppe (21) von einem oder mehreren Hilfsleistungsverbrauchern (22, 23, 25) des Hilfssystems (10) mit elektrischer Leistung von dem Energiespeichersystem (50) beliefert wird;
   - Erhalten von Umgebungsdaten, die zumindest eines von Winddaten und meteorologischen Daten beinhalten;
   - Bestimmen, ob die erhaltenen Umgebungsdaten eine vordefinierte Bedingung erfüllen, wobei die vordefinierte Bedingung zumindest eines von einem Windgeschwindigkeitsschwellenwert, einem Windgeschwindigkeitsbereich, in dem die Windturbine (100) betreibbar ist, um elektrische Leistung zu erzeugen, einem Windgeschwindigkeitstrendschwellenwert (306) oder einem vorbestimmten Energieschwellenwert für eine erwartete Energieerzeugung beinhaltet; und
   - falls die vordefinierte Bedingung erfüllt ist, Bewirken eines Übergangs des Betriebs der Windturbine (100) in den Energieerntemodus (74), wobei der Übergang des Betriebs in den Energieerntemodus (74) Liefern von elektrischer Leistung von dem Energiespeichersystem (50) an den einen oder die mehreren Hilfsleistungsverbraucher (12, 13, 14) der ersten Gruppe (11) umfasst, und

   **dadurch gekennzeichnet, dass**
   die vordefinierte Bedingung den Windgeschwindigkeitstrendschwellenwert (306) beinhaltet, und wobei das Bestimmen, ob die vordefinierte Bedingung erfüllt ist, Vergleichen eines Trends der Windgeschwindigkeit (305), der von den erhaltenen Winddaten abgeleitet ist, mit dem Windgeschwindigkeitstrendschwellenwert (306) umfasst, wobei der Trend angibt, ob die Windgeschwindigkeit im Laufe der Zeit zunimmt oder im Laufe der Zeit abnimmt.

2. Verfahren nach Anspruch 1, wobei der Windgeschwindigkeitsschwellenwert der vordefinierten Bedingung einen eingeschnittenen Mindestwindgeschwindigkeitsschwellenwert, bei oder über dem die Windturbine (100) betreibbar ist, um elektrische Leistung zu produzieren, und/oder einen eingeschnittenen Höchstwindgeschwindigkeitsschwellenwert, bei oder unter dem die Windturbine (100) betreibbar ist, um elektrische Leistung zu produzieren, beinhaltet.

3. Verfahren nach Anspruch 1 oder 2, wobei das Erhalten der Umgebungsdaten Erhalten von Windgeschwindigkeitsdaten und Zeitfiltern der Windgeschwindigkeitsdaten umfasst, wobei das Bestimmen, ob die vordefinierte Bedingung erfüllt ist, bevorzugt Vergleichen der zeitgefilterten Windgeschwindigkeitsdaten (301) mit dem Windgeschwindigkeitsschwellenwert und/oder mit dem Windgeschwindigkeitsbereich umfasst.

4. Verfahren nach einem der vorhergehenden Ansprüche, ferner umfassend Ableiten des Trends der Windgeschwindigkeit (305) durch Vergleichen von zeitgefilterten Windgeschwindigkeitsdaten, die mit einer ersten Zeitkonstante gefiltert werden, mit zeitgefilterten Windgeschwindigkeitsdaten, die mit einer zweiten Zeitkonstante gefiltert werden, oder Vergleichen einer gemittelten Windgeschwindigkeit, die aus den Windgeschwindigkeitsdaten für einen ersten Zeitpunkt erhalten wird, mit einer gemittelten Windgeschwindigkeit, die aus den Windgeschwindigkeitsdaten für einen zweiten Zeitpunkt erhalten wird, der sich von dem ersten Zeitpunkt unterscheidet.

5. Verfahren nach einem der vorhergehenden Ansprüche, wobei die vordefinierte Bedingung eine Windgeschwindigkeitsbedingung umfasst, die den Windgeschwindigkeitsschwellenwert und/oder den Windgeschwindigkeitsbereich beinhaltet, und ferner eine Windgeschwindigkeitstrendbedingung umfasst, die den Windgeschwindigkeitstrendschwellenwert beinhaltet, wobei die vordefinierte Bedingung erfüllt ist, falls die Windgeschwindigkeitsbedingung und die Windgeschwindigkeitstrendbedingung erfüllt sind.

6. Verfahren nach einem der vorhergehenden Ansprüche, wobei die vordefinierte Bedingung eine erste Windgeschwindigkeitsbedingung umfasst, die den Windgeschwindigkeitsschwellenwert und/oder den Windgeschwindigkeitsbereich beinhaltet, und ferner eine zweite Windgeschwindigkeitsbedingung umfasst, die einen zweiten Windgeschwindigkeitsschwellenwert (303) und/oder einen zweiten Windgeschwindigkeitsbereich beinhaltet, wobei der zweite Windgeschwindigkeitsschwellenwert (303) höher als der Windgeschwindigkeitsschwellenwert ist, falls der Windgeschwindigkeitsschwellenwert ein Mindestschwellenwert ist, und wobei der zweite Windgeschwindigkeitsschwellenwert niedriger als der Windgeschwindigkeitsschwellenwert ist, falls der Windgeschwindigkeitsschwellenwert ein Höchstschwellenwert ist, und/oder wobei der zweite Windgeschwindigkeitsbereich jeweils schmaler als der Windgeschwindigkeitsbereich ist und darin angeordnet ist, wobei die vordefinierte Bedingung erfüllt ist, falls die zweite Windgeschwindigkeitsbedingung erfüllt ist.

7. Verfahren nach einem der vorhergehenden Ansprüche, wobei der Windgeschwindigkeitsschwellenwert und/oder der Windgeschwindigkeitsbereich variabel sind und basierend auf einer Energiemenge bestimmt werden, die in dem Energiespeichersystem gespeichert ist.

8. Verfahren nach Anspruch 7, wobei für eine niedrigere Menge an gespeicherter Energie der Windgeschwindigkeitsschwellenwert auf einen strengeren Wert eingestellt ist und/oder der Windgeschwindigkeitsbereich auf einen engeren Bereich eingestellt ist und wobei für eine höhere Menge an gespeicherter Energie der Windgeschwindigkeitsschwellenwert auf einen weniger strengen Wert eingestellt ist und/oder der Windgeschwindigkeitsbereich auf einen breiteren Bereich eingestellt ist.

9. Verfahren nach einem der vorhergehenden Ansprüche, wobei das Erhalten der meteorologischen Daten Erhalten einer Vorhersage von Windbedingungen für einen zukünftigen Zeitraum umfasst und wobei das Bestimmen, ob die vordefinierte Bedingung erfüllt ist, Vergleichen der vorhergesagten Windbedingungen mit dem Windgeschwindigkeitsschwellenwert und/oder dem Windgeschwindigkeitsbereich umfasst, wobei bevorzugt die vordefinierte Bedingung erfüllt ist, falls zu einem zukünftigen Zeitpunkt die vorhergesagten Windbedingungen den Windgeschwindigkeitsschwellenwert erfüllen und/oder innerhalb des Windgeschwindigkeitsbereichs sind.

10. Verfahren nach einem der vorhergehenden Ansprüche, wobei das Erhalten der meteorologischen Daten Erhalten einer Vorhersage von Windbedingungen für einen zukünftigen Zeitraum umfasst, wobei das Bestimmen, ob die vordefinierte Bedingung erfüllt ist, Bestimmen eines kontinuierlichen Zeitraums umfasst, über den die vorhergesagten Windbedingungen innerhalb des Windgeschwindigkeitsbereichs sind,

    wobei das Bestimmen, ob die vordefinierte Bedingung erfüllt ist, ferner Folgendes umfasst:

        - Schätzen einer Energiemenge, von der erwartet wird, dass sie durch die Windturbine (100) innerhalb des kontinuierlichen Zeitraums erzeugt wird,
        - Vergleichen der geschätzten Energiemenge mit dem vorbestimmten Energieschwellenwert, wobei der vorbestimmte Energieschwellenwert größer als eine Energiemenge ist, die zum Übergang des Windturbinenbetriebs von dem ersten Betriebsmodus (72) in den Energieerntemodus (74) erforderlich ist, wobei die Bedingung erfüllt ist, falls die geschätzte Energiemenge den vorbestimmten Energieschwellenwert erfüllt oder überschreitet,

    und/oder ferner Folgendes umfasst:

        - Bestimmen, dass die Bedingung erfüllt ist, falls der kontinuierliche Zeitraum einen vorbestimmten Dauerschwellenwert überschreitet.

11. Verfahren nach einem der vorhergehenden Ansprüche, wobei die erhaltenen Umgebungsdaten lokal an einer Stelle der Windturbine (100) oder einer Gruppe von Windturbinen sind, wobei der Übergang individuell für die Windturbine (100) oder die Gruppe von Windturbinen basierend auf den lokalen Umgebungsdaten für die jeweilige Windturbine (100) oder Gruppe von Windturbinen durchgeführt wird.

12. Verfahren nach einem der vorhergehenden Ansprüche, wobei, falls die Windturbine (100) in dem Energieerntemodus (74) betrieben wird und falls eine zweite vordefinierte Bedingung erfüllt ist, das Verfahren Bewirken, dass der Betrieb der Windturbine (100) in den ersten Betriebsmodus (72) übergeht, umfasst, wobei bevorzugt das Erhalten der meteorologischen Daten Erhalten einer Vorhersage von Windbedingungen für einen zukünftigen Zeitraum umfasst, wobei das Bestimmen, ob die zweite vordefinierte Bedingung erfüllt ist, Folgendes umfasst:

- Vergleichen der vorhergesagten Windbedingungen mit einem ausgeschnittenen Windgeschwindigkeitsbereich; und
- Bestimmen eines zweiten Zeitraums, in dem die vorhergesagten Windbedingungen außerhalb des ausgeschnittenen Windgeschwindigkeitsbereichs sind,

wobei, falls die Windturbine (100) in dem Energieerntemodus (74) betrieben wird und der zweite Zeitraum kürzer als ein Aufrechterhaltungszeitraum ist, der Betrieb der Windturbine (100) in dem Energieerntemodus (74) während des zweiten Zeitraums aufrechterhalten wird.

13. Windturbinensteuersystem, das dazu konfiguriert ist, den Betrieb einer Windturbine (100) zum Übergang des Betriebs der Windturbine in einen Energieerntemodus (74) zu steuern, in dem die Windturbine (100) betrieben wird, um elektrische Leistung aus Windenergie zu erzeugen, wobei ein Energiespeichersystem (50) assoziiert mit der Windturbine (100) dazu konfiguriert ist, elektrische Leistung an ein Hilfssystem (10) der Windturbine zu liefern, wenn die Windturbine (100) keine elektrische Leistung erzeugt oder empfängt, die zum Beliefern des Hilfssystems (10) ausreichend ist, wobei das Steuersystem (20) dazu konfiguriert ist, das Verfahren nach einem der Ansprüche 1-12 durchzuführen.

14. Computerprogramm zum Steuern des Betriebs einer Windturbine, wobei ein Energiespeichersystem (50) assoziiert mit der Windturbine (100) dazu konfiguriert ist, elektrische Leistung an ein Hilfssystem (10) der Windturbine zu liefern, wenn die Windturbine (100) keine elektrische Leistung erzeugt oder empfängt, die zum Beliefern des Hilfssystems (10) ausreichend ist, wobei das Computerprogramm Steueranweisungen umfasst, die, wenn durch eine Verarbeitungseinheit (26) eines Steuersystems (20), das den Betrieb der Windturbine (100) steuert, ausgeführt, bewirken, dass die Verarbeitungseinheit (26) das Verfahren nach einem der Ansprüche 1 bis 12 durchführt.

**Revendications**

1. Procédé pour assurer la transition du fonctionnement d'une éolienne vers un mode de collecte d'énergie dans lequel l'éolienne (100) fonctionne pour générer de l'énergie électrique à partir de l'énergie éolienne, dans lequel un système de stockage d'énergie (50) associé à l'éolienne (100) est configuré pour fournir de l'énergie électrique à un système auxiliaire (10) de l'éolienne lorsque l'éolienne ne génère pas ou ne reçoit pas d'énergie électrique suffisante pour alimenter le système auxiliaire (10), le procédé comprenant les étapes consistant à :

- réaliser le fonctionnement de l'éolienne (100) dans un premier mode de fonctionnement (72) dans lequel l'éolienne (100) ne génère pas d'énergie électrique à partir de l'énergie éolienne, dans lequel, dans le premier mode de fonctionnement (72), une alimentation en énergie électrique d'un premier groupe (11) d'un ou plusieurs consommateurs d'énergie auxiliaires (12, 13, 14) du système auxiliaire (10) est cessée, et dans lequel un second groupe (21) d'un ou plusieurs consommateurs d'énergie auxiliaires (22, 23, 25) du système auxiliaire (10) est alimenté en énergie électrique à partir du système de stockage d'énergie (50) ;
- obtenir des données environnementales incluant au moins l'une parmi des données de vent et des données météorologiques ;
- déterminer si les données environnementales obtenues satisfont à une condition prédéfinie, dans lequel la condition prédéfinie inclut au moins l'un parmi un seuil de vitesse de vent, une plage de vitesses de vent dans laquelle l'éolienne (100) peut fonctionner pour générer de l'énergie électrique, un seuil de tendance de vitesse de vent (306), ou un seuil d'énergie prédéterminé pour une génération d'énergie attendue ; et
- si la condition prédéfinie est satisfaite, provoquer une transition du fonctionnement de l'éolienne (100) vers le mode de collecte d'énergie (74), dans lequel la transition du fonctionnement vers le mode de collecte d'énergie (74) comprend la fourniture d'énergie électrique à partir du système de stockage d'énergie (50) aux un ou plusieurs consommateurs d'énergie auxiliaires (12, 13, 14) du premier groupe (11), et

**caractérisé en ce que**

la condition prédéfinie inclut le seuil de tendance de vitesse de vent (306) et dans lequel le fait de déterminer si la condition prédéfinie est satisfaite comprend la comparaison d'une tendance de la vitesse de vent (305) dérivée des données de vent obtenues au seuil de tendance de vitesse de vent (306), dans lequel la tendance indique si la vitesse du vent augmente au cours du temps ou diminue au cours du temps.

2. Procédé selon la revendication 1, dans lequel le seuil de vitesse de vent de la condition prédéfinie inclut un seuil de vitesse de vent de démarrage minimal au niveau ou au-dessus duquel l'éolienne (100) peut fonctionner pour produire de l'énergie électrique, et/ou un seuil de vitesse de vent de démarrage maximal au niveau ou en dessous duquel l'éolienne (100) peut fonctionner pour produire de l'énergie électrique.

3. Procédé selon la revendication 1 ou 2, dans lequel l'obtention des données environnementales comprend l'obtention de données de vitesse de vent et le filtrage temporel des données de vitesse de vent, dans lequel le fait de déterminer si la condition prédéfinie est satisfaite comprend de préférence la comparaison des données de vitesse de vent filtrées temporellement (301) au seuil de vitesse de vent et/ou à la plage de vitesses de vent.

4. Procédé selon l'une quelconque des revendications précédentes, comprenant en outre la dérivation de la tendance de la vitesse de vent (305) en comparant des données de vitesse de vent filtrées temporellement filtrées avec une première constante de temps à des données de vitesse de vent filtrées temporellement filtrées avec une seconde constante de temps, ou en comparant une vitesse de vent moyennée obtenue à partir des données de vitesse de vent pour un premier point dans le temps à une vitesse de vent moyennée obtenue à partir des données de vitesse de vent pour un second point dans le temps différent du premier point dans le temps.

5. Procédé selon l'une quelconque des revendications précédentes, dans lequel la condition prédéfinie comprend une condition de vitesse de vent incluant ledit seuil de vitesse de vent et/ou ladite plage de vitesses de vent et comprend en outre une condition de tendance de vitesse de vent incluant ledit seuil de tendance de vitesse de vent, dans lequel la condition prédéfinie est satisfaite si la condition de vitesse de vent et la condition de tendance de vitesse de vent sont satisfaites.

6. Procédé selon l'une quelconque des revendications précédentes, dans lequel la condition prédéfinie comprend une première condition de vitesse de vent incluant ledit seuil de vitesse de vent et/ou ladite plage de vitesses de vent et comprend en outre une second condition de vitesse de vent incluant un second seuil de vitesse de vent (303) et/ou une seconde plage de vitesses de vent, dans lequel le second seuil de vitesse de vent (303) est plus élevé que ledit seuil de vitesse de vent si ledit seuil de vitesse de vent est un seuil minimal, et dans lequel le second seuil de vitesse de vent est inférieur audit seuil de vitesse de vent si ledit seuil de vitesse de vent est un seuil maximal, et/ou dans lequel la seconde plage de vitesses de vent est plus étroite que et est disposée à l'intérieur de ladite plage de vitesses de vent, respectivement, dans lequel la condition prédéfinie est satisfaite si la seconde condition de vitesse de vent est satisfaite.

7. Procédé selon l'une quelconque des revendications précédentes, dans lequel le seuil de vitesse de vent et/ou la plage de vitesses de vent est variable et est déterminé sur la base d'une quantité d'énergie stockée dans ledit système de stockage d'énergie.

8. Procédé selon la revendication 7, dans lequel pour une quantité plus faible d'énergie stockée, le seuil de vitesse de vent est fixé à une valeur plus stricte et/ou la plage de vitesses de vent est fixée à une plage plus étroite, et dans lequel pour une quantité plus élevée d'énergie stockée, le seuil de vitesse de vent est fixé à une valeur moins stricte et/ou la plage de vitesses de vent est fixée à une plage plus large.

9. Procédé selon l'une quelconque des revendications précédentes, dans lequel l'obtention desdites données météorologiques comprend l'obtention d'une prévision de conditions de vent pour une période de temps future, et dans lequel le fait de déterminer si la condition prédéfinie est satisfaite comprend la comparaison des conditions de vent prévues au seuil de vitesse de vent et/ou à la plage de vitesses de vent,
dans lequel de préférence, la condition prédéfinie est satisfaite si, à un point futur dans le temps, les conditions de vent prévues satisfont au seuil de vitesse de vent et/ou se situent dans la plage de vitesses de vent.

10. Procédé selon l'une quelconque des revendications précédentes, dans lequel l'obtention desdites données météorologiques comprend l'obtention d'une prévision de conditions de vent pour une période de temps future, dans lequel le fait de déterminer si la condition prédéfinie est satisfaite comprend la détermination d'une période de temps continue sur laquelle les conditions de vent prévues se situent dans la plage de vitesses de vent, dans lequel le fait de déterminer si la condition prédéfinie est satisfaite comprend en outre les étapes consistant à :

- estimer une quantité d'énergie dont la génération est attendue par l'éolienne (100) au sein de ladite période de temps continue,
- comparer la quantité d'énergie estimée au seuil d'énergie prédéterminé, dans lequel le seuil d'énergie prédéterminé est supérieur à une quantité d'énergie requise pour assurer la transition du fonctionnement de l'éolienne du premier mode opérationnel (72) au mode de collecte d'énergie (74), dans lequel la condition est satisfaite si la quantité d'énergie estimée atteint ou dépasse le seuil d'énergie prédéterminé,

et/ou comprend en outre l'étape consistant à

- déterminer que la condition est satisfaite si la période de temps continue dépasse une durée prédéterminée.

11. Procédé selon l'une quelconque des revendications précédentes, dans lequel les données environnementales obtenues sont locales à un emplacement de l'éolienne (100) ou d'un groupe d'éoliennes, dans lequel la transition est réalisée individuellement pour l'éolienne (100) ou le groupe d'éoliennes sur la base des données environnementales locales pour l'éolienne (100) respective ou le groupe d'éoliennes respectif.

12. Procédé selon l'une quelconque des revendications précédentes, dans lequel si l'éolienne (100) fonctionne dans le mode de collecte d'énergie (74) et si une seconde condition prédéfinie est satisfaite, le procédé comprend l'étape consistant à provoquer la transition du fonctionnement de l'éolienne (100) vers le premier mode de fonctionnement (72), dans lequel de préférence, l'obtention desdites données météorologiques comprend l'obtention d'une prévision de conditions de vent pour une période de temps future, dans lequel le fait de déterminer si la seconde condition prédéfinie est satisfaite comprend les étapes consistant à :

- comparer les conditions de vent prévues à une plage de vitesses de vent de coupure ; et
- déterminer une seconde période de temps au cours de laquelle les conditions de vent prévues sont en dehors de la plage de vitesses de vent de coupure,

dans lequel, si l'éolienne (100) fonctionne dans le mode de collecte d'énergie (74) et que la seconde période de temps est plus courte qu'une période de temps de maintien, le fonctionnement de l'éolienne (100) est maintenu dans le mode de collecte d'énergie (74) pendant ladite seconde période de temps.

13. Système de commande d'éolienne configuré pour commander le fonctionnement d'une éolienne (100) pour assurer la transition du fonctionnement de l'éolienne vers un mode de collecte d'énergie (74) dans lequel l'éolienne (100) fonctionne pour générer de l'énergie électrique à partir de l'énergie éolienne, dans lequel un système de stockage d'énergie (50) associé à l'éolienne (100) est configuré pour fournir de l'énergie électrique à un système auxiliaire (10) de l'éolienne lorsque l'éolienne (100) ne génère pas ou ne reçoit pas d'énergie électrique suffisante pour alimenter le système auxiliaire (10), dans lequel le système de commande (20) est configuré pour réaliser le procédé selon l'une quelconque des revendications 1 à 12.

14. Programme informatique pour commander le fonctionnement d'une éolienne, dans lequel un système de stockage d'énergie (50) associé à l'éolienne (100) est configuré pour fournir de l'énergie électrique à un système auxiliaire (10) de l'éolienne lorsque l'éolienne (100) ne génère pas ou ne reçoit pas d'énergie électrique suffisante pour alimenter le système auxiliaire (10), dans lequel le programme informatique comprend des instructions de commande qui, lorsqu'elles sont exécutées par une unité de traitement (26) d'un système de commande (20) qui commande le fonctionnement de l'éolienne (100), amènent l'unité de traitement (26) à réaliser le procédé selon l'une quelconque des revendications 1 à 12.

FIG 1

FIG 2

# FIG 3

# FIG 4

# FIG 5

```
┌─────────────────────────────────────────────────┐ S10
│              Operate in sleep mode              │
└─────────────────────────────────────────────────┘

┌─────────────────────────────────────────────────┐
│ Obtain environmental data, in particular wind speed │
│          and/or meteorological data;             │ S11
│      obtain storage state of energy storage system │
└─────────────────────────────────────────────────┘

┌─────────────────────────────────────────────────┐
│            Obtain forecast for wind speed        │ S12
└─────────────────────────────────────────────────┘

┌─────────────────────────────────────────────────┐
│ Determine cut-in wind speed thresholds/operating │ S13
│        range based on obtained storage state     │
└─────────────────────────────────────────────────┘

┌─────────────────────────────────────────────────┐
│ Determine if one of the following conditions is met: │
│   - Wind speed above minimum threshold or below  │
│     maximum threshold and historical trend above │
│     wind speed trend threshold;                  │
│   - Wind speed within second narrower wind speed │
│     thresholds/range;                            │ S14
│   - Forecasted wind speed within wind speed      │
│     thresholds/range for future point in time    │
│   - Amount of energy expected to be generated during │
│     future continuous period of time is larger than │
│     energy threshold                             │
└─────────────────────────────────────────────────┘
```

S15

no — Condition met?

yes

(A) (FIG 6)          (FIG 6) (B)

# FIG 6

A (FIG 5)  (FIG 5) B

Transition operation to energy harvesting mode — S16

Operate in energy harvesting mode — S17

S18
Wind speed below minimum cut-out or above maximum cut-out wind speed?

no

yes  S19

Transition operation to sleep mode

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021069045 A1